# NEUE EUROPÄISCHE PATENTSCHRIFT

(11) **EP 2 727 125 B2**
(45) Veröffentlichungstag und Bekanntmachung des Hinweises auf die Entscheidung über den Einspruch: **27.11.2019**
(45) Hinweis auf die Patenterteilung: 30.09.2015
(21) Anmeldenummer: 12748411.1
(22) Anmeldetag: 07.08.2012
(51) Int. Cl.: H01H 71/02, H01H 89/06, H02B 1/056, H02P 1/16, H02P 1/02

(54) **SICHERER MOTORSTARTER**
SECURE MOTOR STARTER
DÉMARREUR DE MOTEUR FIABLE

(30) Priorität: 30.08.2011 DE 102011081806
(43) Veröffentlichungstag der Anmeldung: 07.05.2014
(73) Patentinhaber: Siemens Aktiengesellschaft, 80333 München (DE)
(72) Erfinder: AUFSCHNEIDER, Klaus, 92278 Illschwang (DE); MEIER, Markus, 92286 Rieden (DE); ROYER, Fritz, 92256 Hahnbach (DE); SEITZ, Johann, 92224 Amberg (DE)
(86) Internationale Anmeldenummer: PCT/EP2012/065443
(87) Internationale Veröffentlichungsnummer: WO 2013/029937

(56) Entgegenhaltungen:
- EP-A1- 1 126 568
- CN-U- 201 563 083
- DE-A1-102008 031 335
- FR-A1- 2 858 478
- "Signalkonverter, Schaltgeräte, Stromversorgungen, Interface 2007", Katalog von Phoenix Contact, pages 26,27-28,39,
- Datenblatt zu den Sicherheitsrelais PSR-SCP-24DC/URD3/4X1/SXS und PSR-SPP-24DC/URD3/4X1/2X2, 09/2007 seiten 1-7

## Beschreibung

Die Erfindung betrifft einen sicheren Motorstarter sowie ein Verfahren zum sicheren Steuern einer Versorgungsspannung eines Verbrauchers.

Im Bereich der industriellen Automatisierungstechnik werden Motorstarter eingesetzt mit denen ein betriebsmäßiges Schalten von motorischen Lasten erfolgen kann. Hierbei wird mittels eines Schaltgerätes des Motorstarters die Versorgungsspannung eines Verbrauchers, insbesondere eines Elektromotors, gesteuert, d.h. zugeschaltet oder weggeschaltet. Durch entsprechende Ausführungen können mit einem Motorstarter auch sicherheitsrelevante Applikationen gemäß EN 13849 bzw. IEC 61508 abgedeckt werden.

Für sicherheitsgerichtete Applikationen muss der Motorstarter sicher ausgebildet sein. Damit ein Motorstarter sicher ausgebildet ist, ist die Herstellung einer Redundanz am Motorstarter erforderlich. Es werden beispielsweise zwei normale Schaltglieder (Schaltelemente) des Schaltgeräts für dieselbe Funktion in Serie geschaltet. Sind die beiden Schaltglieder ferner unterschiedlich ausgebildet, so liegt ein diversitäres System vor. Damit ein Schaltgerät sicher ausgebildet ist umfasst es folglich mindestens zwei Schaltglieder zum Schalten einer Leitung.

Ein Beispiel für redundante diversitäre Motorstarter sind die F-Starter der Gerätereihe ET200S der Firma SIEMENS. Bei diesen wird die Redundanz und Diversität durch die serielle Anordnung eines Leistungsschalters mit einem Überspannungsauslöser und Schütz erzielt.

Über dezentral angeordneter Sensoren (z.B. Not-Halt-Taster) kann eine Ansteuerung des Motorstarters mittels eines Sensorsignals erfolgen, so dass der Motorstarter entsprechend reagieren kann.

Bei einem sicheren Motorstarter erfolgt eine Auswertung eines derartigen Sensorsignals mittels eines Sicherheitsauswertegerätes des Motorstarters. Dieses Sicherheitsauswertegerät wird hierfür eingangsseitig mit dem Sensor und ausgangsseitig mit einem sicheren Schaltgerät des Motorsteuergeräts verbunden. Aufgabe des Sicherheitsauswertegeräts ist es die Sensorsignale des Sensors sicher zu verarbeiten und diesen sicher zu überwachen. Weiterhin ist es Aufgabe des Sicherheitsauswertegeräts die ordnungsgemäße Funktion des sicheren Schaltgeräts des Motorstarters sicher zu überwachen. Liegt beispielsweise ein Verschweißen eines der beiden Schaltglieder des sicheren Schaltgerätes vor, so kann ein Wiedereinschalten der beiden Schaltglieder durch das Sicherheitsauswertegerät verhindert werden.

Die Verbindung des Sicherheitsauswertegeräts mit dem sicheren Schaltgerät erfolgt derzeit mittels einer kundenseitigen Verdrahtung der beiden Geräte. Dies bedingt jedoch einen erhöhten Aufwand für den Kunden sowie ein Fehlerrisiko. Ferner entsteht ggf. ein Zusatzaufwand für eine Fehlerbeseitigung einer fehlerhaften Verkabelung und/oder ein Zusatzaufwand durch eine geschützte Verlegung der Kabel. Busfähige Motorstarter mit Sicherheitsfunktionen werden z.B. in CN 201563083, EP 1126568, DE 102008031335 und FR 2858478 beschrieben.

Es ist Aufgabe der vorliegenden Erfindung einen verbesserten Motorstarter bereitzustellen. Insbesondere sollen der Aufwand seitens des Kunden sowie die Herstellkosten gering gehalten werden.

Diese Aufgaben werden gelöst durch eine Vorrichtung gemäß Anspruch 1, d.h. durch einen sicheren Motorstarter mit einem Sicherheitsauswertegerät und einem sicheren Schaltgerät, wobei das sichere Schaltgerät eine vierte Schnittstelle umfasst und eine Versorgungsspannung eines Verbrauchers sicher steuern kann und das Sicherheitsauswertegerät eine erste Schnittstelle umfasst und über die erste Schnittstelle einen Steuerbefehl an die vierte Schnittstelle des sicheren Schaltgerätes senden kann, wobei der Motorstarter ferner ein Verbindungsmodul umfasst, welches eine zweite und dritte Schnittstelle umfasst, wobei die zweite Schnittstelle elektrisch leitend mit der dritten Schnittstelle verbunden ist, wobei das Verbindungsmodul mit dem Sicherheitsauswertegerät und dem sicheren Schaltgerät mechanisch koppelbar ist, wobei durch das mechanische Koppeln des Sicherheitsauswertegeräts mit dem Verbindungsmodul eine elektrisch leitende Verbindung zwischen der ersten und zweiten Schnittstelle herstellbar ist und durch das mechanische Koppeln des sicheren Schaltgeräts mit dem Verbindungsmodul eine elektrisch leitende Verbindung zwischen der dritten und vierten Schnittstelle herstellbar ist, so dass im gekoppelten Zustand des Sicherheitsauswertegeräts und des sicheren Schaltgeräts mit dem Verbindungsmodul eine elektrisch leitende Verbindung zwischen der ersten und vierten Schnittstelle über das Verbindungsmodul vorliegt und somit der Steuerbefehl von dem Sicherheitsauswertegerät über das Verbindungsmodul an das sichere Schaltgerät gesendet werden kann.

Erfindungsgemäß wird mittels des Steuerbefehls des Sicherheitsauswertegeräts mindestens ein Schaltglied des Schaltgeräts über eine Verarbeitungseinheit des Schaltgerätes angesteuert, so dass eine über das Schaltglied des Schaltgerätes gesteuerte Versorgungsspannung eines Verbrauchers abgeschaltet werden kann.

Die Einwirkung des Sicherheitsauswertegeräts über das Verbindungsmodul auf das sichere Schaltgerät erfolgt folglich mittels einer Verarbeitung des Steuerbefehls in der Verarbeitungseinheit.

Es wird erfindungsgemäß mittels der Verarbeitungseinheit bei Vorliegen eines Steuerbefehls des Sicherneitsauswertegeräts ein kontaktschonendes Abschalten der Versorgungsspannung durch das Schaltgerät herbeigeführt. Hierfür kann beispielsweise ein anderes Schaltglied des sicheren Schaltgerätes angesteuert werden.

Diese Aufgaben werden ferner gelöst durch eine Vorrichtung gemäß Anspruch 2, d.h. durch einen sicheren Motorstarter mit einem Sicherheitsauswertegerät und einem sicheren Schaltgerät, wobei das sichere Schaltgerät eine vierte Schnittstelle umfasst und eine Versorgungsspannung eines Verbrauchers sicher steuern kann und das Sicherheitsauswertegerät eine erste Schnittstelle umfasst und über die erste Schnittstelle einen Steuerbefehl an die vierte Schnittstelle des sicheren Schaltgerätes senden kann, wobei der Motorstarter ferner ein Verbindungsmodul umfasst, welches eine zweite und dritte Schnittstelle umfasst, wobei die zweite Schnittstelle elektrisch leitend mit der dritten Schnittstelle verbunden ist, wobei das Verbindungsmodul mit dem Sicherheitsauswertegerät und dem sicheren Schaltgerät mechanisch koppelbar ist, wobei durch das mechanische Koppeln des Sicherheitsauswertegeräts mit dem Verbindungsmodul eine elektrisch leitende Verbindung zwischen der ersten und zweiten Schnittstelle herstellbar ist und durch das mechanische Koppeln des sicheren Schaltgeräts mit dem Verbindungsmodul eine elektrisch leitende Verbindung zwischen der dritten und vierten Schnittstelle herstellbar ist, so dass im gekoppelten Zustand des Sicherheitsauswertegeräts und des sicheren Schaltgeräts mit dem Verbindungsmodul eine elektrisch leitende Verbindung zwischen der ersten und vierten Schnittstelle über das Verbindungsmodul vorliegt und somit der Steuerbefehl von dem Sicherheitsauswertegerät über das Verbindungsmodul an das sichere Schaltgerät gesendet werden kann.

Erfindungsgemäß wird mittels des Steuerbefehls des Sicherheitsauswertegeräts mindestens ein Schaltglied des Schaltgeräts unmittelbar und/oder über eine Verarbeitungseinheit des Schaltgerätes angesteuert, so dass eine über das Schaltglied des Schaltgerätes gesteuerte Versorgungsspannung eines Verbrauchers abgeschaltet werden kann.

Die Einwirkung des Sicherheitsauswertegeräts über das Verbindungsmodul auf das sichere Schaltgerät kann folglich:
a) zum einen über das unmittelbare Wegschalten der Versorgungsspannung mittels des Steuerbefehls erfolgen und/oder
b) mittels einer Verarbeitung des Steuerbefehls in der Verarbeitungseinheit erfolgen.

Bei dem unmittelbaren Wegschalten der Versorgungsspannung mittels des Steuerbefehls wird ein Schaltglied des Schaltgerätes direkt durch das den Steuerbefehl charakterisierende Signal des Sicherheitsauswertegeräts angesteuert. Es erfolgt somit keine Verarbeitung des den Steuerbefehl charakterisierenden Signals in der Verarbeitungseinheit des sicheren Schaltgeräts.

Erfindungsgemäß wird mittels des Steuerbefehls des Sicherheitsauswertegeräts die Spannungsversorgung des sicheren Schaltgerätes abgeschaltet, so dass eine über das sichere Schaltgerät gesteuerte Versorgungsspannung eines Verbrauchers abgeschaltet wird. Durch das Wegschalten der Versorgungsspannung des sicheren Schaltgerätes wird automatisch die Versorgungsspannung zum Verbraucher abgeschaltet. Hierbei ist ein ein- oder zweipoliges Abschalten des sicheren Schaltgerätes möglich.

Vorteilhafte Weiterbildungen der Erfindung sind in den abhängigen Ansprüchen 3 bis 10 angegeben.

Bei dem erfindungsgemäßen Motorstarter erfolgt das elektrische Verbinden des sicheren Schaltgeräts mit dem Sicherheitsauswertegerät mittels des Verbindungsmoduls. Hierfür werden das Sicherheitsauswertegerät sowie das sichere Schaltgerät mit dem Verbindungsmodul mechanisch gekoppelt. Während des mechanischen Koppelns erfolgt ferner eine elektrische Kontaktierung der beteiligten Schnittstellen. Über die erste Schnittstelle des Sicherheitsauswertegeräts wird eine elektrisch leitende Verbindung zu der zweiten Schnittstelle des Verbindungsmoduls hergestellt. Die zweite Schnittstelle des Verbindungsmoduls ist mit der dritten Schnittstelle des Verbindungsmoduls elektrisch leitend verbunden. Die dritte Schnittstelle ist im gekoppelten Zustand des sicheren Schaltgerätes mit dem Verbindungsmodul elektrisch leitend mit der vierten Schnittstelle des sicheren Schaltgerätes verbunden. Es liegt somit im gekoppelten Zustand der Geräte zwischen der ersten Schnittstelle und der vierten Schnittstelle eine elektrische leitende Verbindung vor, so dass das Sicherheitsauswertegerät über das Verbindungsmodul ein Signal an das sichere Schaltgerät senden kann.

Ein Anwender muss folglich lediglich das Sicherheitsauswertegerät sowie das sichere Schaltgerät mit dem Verbindungsmodul koppeln, um die notwendige elektrische Verbindung zwischen dem Sicherheitsauswertegerät mit dem sicheren Schaltgerät herzustellen.

Vorzugsweise wird hierbei das den Steuerbefehl charakterisierende Signal des Sicherheitsauswertegeräts unverändert über das Verbindungsmodul zum sicheren Schaltgerät durchgereicht, d.h. es erfolgt keine Veränderung des Signals durch das Verbindungsmodul.

Die Verbindung zwischen der zweiten und dritten Schnittstelle ist vorzugsweise mittels einer durchgehenden Leitung realisiert. Werden mehrere Signaltypen von dem Sicherheitsauswertegerät an das sichere Schaltgerät übertragen, so liegen vorzugsweise mehrere durchgehende Leitungen zwischen der zweiten und dritten Schnittstelle vor.

Ein Verbraucher ist insbesondere ein Elektromotor.

In einer vorteilhaften Ausführungsform der Erfindung ist die elektrisch leitende Verbindung zwischen der zweiten und dritten Schnittstelle des Verbindungsmoduls innerhalb des Gehäuses des Verbindungsmoduls geführt. Das Verbindungsmodul besteht insbesondere aus einem Spritzgussmaterial und ist nicht mit einer Leitung gleichzusetzen. Insbesondere weist das Verbindungsmodul im Wesentlichen die Baubreite des Sicherheitsauswertegeräts und des sicheren Schaltgerätes zusammen auf. Vorzugsweise ist die Seitenfläche des Verbindungsmoduls hinsichtlich der zum Sicherheitsauswertegerät und zum sicheren Schaltgerät gewandten Seite kleiner als 50 mm, insbesondere ca. 45 mm.

Die Einwirkung des Sicherheitsauswertegeräts über das Verbindungsmodul auf das sichere Schaltgerät kann folglich:
a) zum einen über das unmittelbare Wegschalten der Versorgungsspannung mittels des Steuerbefehls erfolgen und/oder
b) mittels einer Verarbeitung des Steuerbefehls in der Verarbeitungseinheit erfolgen.

Bei dem unmittelbaren Wegschalten der Versorgungsspannung mittels des Steuerbefehls wird ein Schaltglied des Schaltgerätes direkt durch das den Steuerbefehl charakterisierende Signal des Sicherheitsauswertegeräts angesteuert. Es erfolgt somit keine Verarbeitung des den Steuerbefehl charakterisierenden Signals in der Verarbeitungseinheit des sicheren Schaltgeräts.

Wenn das den Steuerbefehl charakterisierende Signal zur weiteren Verarbeitung der Verarbeitungseinheit zugeführt wird, so kann mittels der Verarbeitungseinheit (Controller) ein sicheres Einwirken auf die Versorgungsspannung des Verbrauchers durch das sichere Schaltgerät erfolgen. Es kann beispielsweise mittels der Verarbeitungseinheit bei vorliegen eines Steuerbefehls des Sicherheitsauswertegeräts ein kontaktschonendes Abschalten der Versorgungsspannung durch das Schaltgerät herbeigeführt werden. Hierfür kann beispielsweise ein anderes Schaltglied des sicheren Schaltgerätes angesteuert werden.

Beide Möglichkeiten sind ebenso kombinierbar, so dass zunächst durch die Verarbeitungseinheit ein kontaktschonendes Abschalten der Versorgungsspannung über ein erstes Schaltglied des Schaltgerätes erfolgt und daraufhin ein direktes Abschalten eines zweiten die Versorgungsspannung steuernden Schaltgliedes des Schaltgerätes erfolgt.

In einer weiteren vorteilhaften Ausführungsform der Erfindung kann im gekoppelten Zustand des Sicherheitsauswertegeräts und des Schaltgerätes mit dem Verbindungsmodul das Sicherheitsauswertegerät die Schaltstellung mindestens eines Schaltgliedes des Schaltgerätes über die elektrisch leitende Verbindung zwischen der ersten und vierten Schnittstelle ermitteln.

Hierfür wird ebenso durch das Verbindungsmodul eine elektrisch leitende Verbindung zwischen der vierten und ersten Schnittstelle hergestellt, so dass Auswertesignal übertragen werden können. Diese Auswertesignale werden vorzugsweise durch das Verbindungsmodul lediglich durchgereicht, d.h. es erfolgt keine weiterführende Bearbeitung/Analyse des Signals in dem Verarbeitungsmodul. Hierfür kann vorzugsweise die bestehende elektrisch leitende Verbindung, welche zur Übertragung des Steuerbefehls genutzt wird, verwendet werden. Es ist aber ebenso denkbar, dass eine separate elektrisch leitende Verbindung durch das Verbindungsmodul bereitgestellt wird, so dass die Schnittstellen jeweils mindestens zwei separate Kontaktstellen aufweisen. In dem Verbindungsmodul werden folglich zwei Leitungen geführt.

In einer weiteren vorteilhaften Ausführungsform der Erfindung ist die mechanische Kopplung zwischen dem Sicherheitsauswertegerät und dem sicheren Schaltgeräte mit dem Verbindungsmodul eine lösbare Verbindung. Durch das Lösen der Geräte von dem Verbindungsmodul soll es insbesondere zu keiner Beschädigung der Geräte sowie des Verbindungsmoduls kommen.

Bei dem mechanischen Koppeln des Sicherheitsauswertegerätes mit dem Verbindungsmodul und dem sicheren Schaltgerät mit dem Verbindungsmodul wird insbesondere eine mechanisch feste Verbindung zwischen den beteiligten Geräten mit dem Verbindungsmodulen hergestellt, so dass ein unbeabsichtigtes Trennen der Geräte von dem Verbindungsmodul verhindert wird. Das mechanisch feste Koppeln erfolgt beispielsweise mittels einer Verschraubung oder eines Verschnappens (Formschluss) der Komponenten miteinander. Diese feste Verbindung kann jedoch wieder derart gelöst werden, dass es zu keiner Beschädigung der beteiligten Komponenten kommt.

In einer weiteren vorteilhaften Ausführungsform der Erfindung ist die zweite und dritte Schnittstelle des Verbindungsmoduls an einer gleichen Seitenfläche des Verbindungsmoduls angeordnet.

In einer weiteren vorteilhaften Ausführungsform der Erfindung ist das Sicherheitsauswertegerät mit mindestens einem Sensor verbindbar, so dass durch ein an dem Sicherheitsauswertegerät anliegendem Sensorsignal des Sensors eine Ausgabe eines Steuersignals ausgelöst werden kann.

Durch den Sensor kann folglich ein Sensorsignal an das Sicherheitsauswertegerät ausgegeben werden, so dass das Sicherheitsauswertegerät hierauf einen Steuerbefehl an das sichere Schaltgerät ausgeben kann, so dass die Versorgungsspannung des Verbrauchers weggeschaltet wird.

Im Folgenden werden die Erfindung und Ausgestaltungen der Erfindung anhand der in den Figuren dargestellten Ausführungsbeispiele näher beschrieben und erläutert. Es zeigen:
- FIG 1: einen schematischen Aufbau eines sicheren Motorstarters, und
- FIG 2: eine perspektivische Ansicht eines Motorstarters.

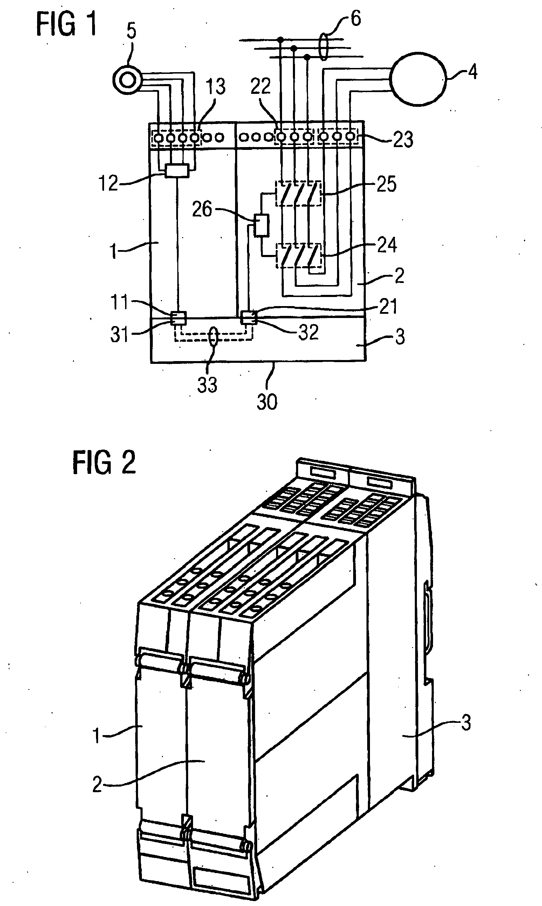

FIG 1 zeigt einen schematischen Aufbau eines sicheren Motorstarters. Mittels des Motorstarters kann ein Verbraucher 4 (z.B. Elektromotor) sicherheitsgerichtet angesteuert werden. Hierfür umfasst der Motorstarter ein Sicherheitsauswertegerät 1, ein Verbindungsmodul 3 sowie ein sicheres Schaltgerät 2.

Das Sicherheitsauswertegerät 1 ist eingangsseitig 13 mit einem Sensor 5 (z.B. Not-Halt-Taster) verbunden.

Das sichere Schaltgerät 2 ist eingansseitig 22 mit einem Versorgungsnetz 6 des Verbrauchers 4 und ausgangsseitig 23 mit dem Verbraucher 4 verbunden, so dass die Energieversorgung des Verbrauchers 4 über das Schaltgerät 2 geführt wird. Mittels zweier in Serie geschalteter Schaltglieder 24,25 kann das Schaltgerät 2 jeweils die Energieversorgung zum Verbraucher 4 und somit die Versorgungsspannung zum Verbraucher 4 wegschalten.

Das sichere Schaltgerät 2 ist sicherheitsgerichtet ausgebildet, so dass die Abschaltung der Versorgungsspannung des Verbrauchers 4 sicher gemäß IEC 61508 erfolgt.

Das Sicherheitsauswertegerät 1 weist eine erste Schnittstelle 11 auf. Das sichere Schaltgerät 2 weist eine vierte Schnittstelle 21 auf. Das Verbindungsmodul 3 umfasst eine zweite und dritte Schnittstelle 31,32. Zum elektrischen Verbinden des Sicherheitsauswertegerätes 1 mit dem sicheren Schaltgerät 2 muss ein Anwender nun lediglich das Sicherheitsauswertegerät 1 sowie das sichere Schaltgerät 2 mit dem Verbindungsmodul 3 mechanisch koppeln. Durch das mechanische Koppeln wird die erste Schnittstelle 11 mit der zweiten Schnittstelle 31 und die dritte Schnittstelle 32 mit der vierten Schnittstelle 21 elektrisch leitend verbunden. Da die zweite Schnittstelle 31 mit der dritten Schnittstelle 32 elektrisch leitend verbunden ist, kann nun ein über die erste Schnittstelle 11 ausgegebenes Signal des Sicherheitsauswertegerätes 1 an die vierte Schnittstelle 21 übertragen werden, so dass dem Schaltgerät 2 dieses Signal vorliegt.

Die Verbindung 33 zwischen der zweiten und dritten Schnittstelle 31,32 ist eine durchgehende Verbindung, d.h. es erfolgt keine Verarbeitung der zu übertragenden Signale in dem Verbindungsmodul 3.

Zwischen dem Sicherheitsauswertegerät 1 und dem sicheren Schaltgerät 2 erfolgt vorzugsweise keine Kommunikation mittels eines Protokolls (z.B. AS-i, IO-Link, Profinet, etc.) über das Verbindungsmodul 3.

Ein Anwender muss zum elektrischen Verbinden des Sicherheitsauswertegeräts 1 mit dem sicheren Schaltgerät 2 lediglich das Sicherheitsauswertegerät 1 und das sichere Schaltgerät 2 mit dem Verbindungsmodul 3 mechanisch koppeln. Durch das mechanische Koppeln der beiden Geräte 1,2 mit dem Verbindungsmodul 3 wird letztendlich die elektrische Verbindung zwischen der ersten Schnittstelle 11 mit der vierten Schnittstelle 21 hergestellt.

Der abgebildete Zustand zeigt den gekoppelten Zustand des Sicherheitsauswertegeräts 1 und des sicheren Schaltgerätes 2 mit dem Verbindungsmodul 3.

Wird beispielsweise durch die Betätigung des Not-Halt-Tasters (Sensor 5) ein Abschalten des Verbrauchers 4 erwünscht (ein Sensorsignal wird durch die Betätigung des Sensors 5 erzeugt), so erkennt das Sicherheitsauswertegerät 1 die Betätigung des Sensors 5 und generiert daraufhin einen Steuerbefehl für das Schaltgerät 2. Anhand des Sensorsignals des Sensors 5 erkennt insbesondere eine Verarbeitungseinheit 12 des Sicherheitsauswertegerätes 1, dass der Verbraucher 4 abgeschaltet werden soll. Die Verarbeitungseinheit 12 gibt hierauf den Steuerbefehl an das sichere Schaltgerät 2 über die erste Schnittstelle 11 aus. Dieser Steuerbefehl wird mittels eines Steuersignals über die erste Schnittstelle 11 zur vierten Schnittstelle 21 übertragen, so dass das sichere Schaltgerät 2 das Steuersignal und somit den Steuerbefehl des Sicherheitsauswertegeräts 1 empfängt.

Mittels des Steuerbefehls kann nun entweder direkt das erste Schaltglied 24 und/oder zweite Schaltglied 25 des Schaltgerätes 2 angesteuert werden. Ebenso kann der Steuerbefehl zunächst von einer Verarbeitungseinheit 26 des Schaltgerätes 2 empfangen und ausgewertet werden, so dass durch die Verarbeitungseinheit 26 ein Wegschalten der Versorgungsspannung des Verbrauchers 4 über das erste Schaltglied 24 und/oder zweite Schaltglied 25 kontaktschonend erfolgt. Hierfür steuert die Verarbeitungseinheit 26 das erst und/oder zweite Schaltglied 24,25 entsprechend an. Aufgrund eines Steuerbefehls des Sicherheitsauswertegeräts 1 können folglich Kontakte des ersten und/oder zweiten Schaltglieds 24,25 geöffnet werden, so dass dem Verbraucher 4 die Versorgungsspannung wegschaltet wird.

Ferner wird durch das Verbindungsmodul 3 eine elektrisch leitende Verbindung zwischen der ersten Schnittstelle 11 des Sicherheitsauswertegeräts 1 und der vierten Schnittstelle 21 des Schaltgerät 2 hergestellt, so dass das Sicherheitsauswertegerät 1 die Schaltstellung des ersten und zweiten Schaltgliedes 24,25 des Schaltgerätes 2 ermitteln kann. Hierfür weist das Verbindungsmodul 3 eine separate Leitung auf. Die elektrische leitende Verbindung 33 zwischen der zweiten Schnittstelle 31 und der dritten Schnittstelle 32 umfasst folglich zwei Leitungen, eine für den Steuerbefehl des Sicherheitsauswertegerätes 1 und eine zur Überwachung der Schaltstellung des ersten und zweiten Schaltgliedes 24,25.

Es ist ebenso denkbar, dass die zweite Schnittstelle 31 mit der dritten Schnittstelle 32 mit lediglich einer Leitung oder mehreren Leitungen verbunden ist. Je Leitung des Verbindungsmoduls liegt vorzugsweise ein entsprechender Kontakt an den jeweiligen Schnittstellen 11,21,31,32 vor.

Die Leitungen des Verbindungsmoduls 3 werden innerhalb des Gehäuses 30 des Verbindungsmoduls 3 geführt.

Figur 2 zeigt eine perspektivische Ansicht eines Motorstarters gemäß Figur 1. Der abgebildete Motorstarter zeigt den gekoppelten Zustand des Sicherheitsauswertegerät 1 mit dem Verbindungsmodul 3 und des sicheren Schaltgerätes 2 mit dem Verbindungsmodul 3. Die zweite und dritte Schnittstelle des Verbindungsmoduls 3 liegt auf der gleichen Seitenfläche des Verbindungsmoduls 3, so dass das Sicherheitsauswertegerät 1 sowie das sichere Schaltgerät 2 über die gleiche Seitenfläche des Verbindungsmoduls 3 die mechanische und elektrische Verbindung mit diesem herstellt. Die Baubreite des Verbindungsmoduls 3 ist im Wesentlichen gleich der des Sicherheitsauswertegerätes 1 und des sicheren Schaltgerätes 2 zusammen. Die der zweiten und dritten Schnittstellen gegenüberliegende Seitenfläche des Verbindungsmoduls 3 weist eine Vorrichtung für eine Befestigung auf einer Hutschiene auf.

## Patentansprüche

1. Sicherer Motorstarter mit einem Sicherheitsauswertegerät (1) und einem sicheren Schaltgerät (2), wobei das sichere Schaltgerät (2) zwei Schaltglieder (24,25) und eine vierte Schnittstelle (21) umfasst und eine Versorgungsspannung eines Verbrauchers (4) sicher steuern kann und das Sicherheitsauswertegerät (1) eine erste Schnittstelle (11) umfasst und über die erste Schnittstelle (11) einen Steuerbefehl an die vierte Schnittstelle (21) des sicheren Schaltgerätes (2) senden kann, wobei das Sicherheitsauswertegerät (1) mit mindestens einem Sensor (5) verbindbar ist, so dass durch ein an dem Sicherheitsauswertegerät (1) anliegendem Sensorsignal des Sensors (5) eine Ausgabe des Steuerbefehls ausgelöst werden kann,
**dadurch gekennzeichnet, dass**
der Motorstarter ferner ein Verbindungsmodul (3) umfasst, welches eine zweite und dritte Schnittstelle (31,32) umfasst, wobei die zweite Schnittstelle (31) elektrisch leitend mit der dritten Schnittstelle (32) verbunden ist, wobei das Verbindungsmodul (3) mit dem Sicherheitsauswertegerät (1) und dem sicheren Schaltgerät (2) mechanisch koppelbar ist, wobei durch das mechanische Koppeln des Sicherheitsauswertegeräts (1) mit dem Verbindungsmodul (3) eine elektrisch leitende Verbindung zwischen der ersten und zweiten Schnittstelle (11,31) herstellbar ist und durch das mechanische Koppeln des sicheren Schaltgeräts (2) mit dem Verbindungsmodul (3) eine elektrisch leitende Verbindung zwischen der dritten und vierten Schnittstelle (32,21) herstellbar ist, so dass im gekoppelten Zustand des Sicherheitsauswertegeräts (1) und des sicheren Schaltgeräts (2) mit dem Verbindungsmodul (3) eine elektrisch leitende Verbindung zwischen der ersten und vierten Schnittstelle (11,21) über das Verbindungsmodul (3) vorliegt und somit der Steuerbefehl von dem Sicherheitsauswertegerät (1) über das Verbindungsmodul (3) an das sichere Schaltgerät (2) gesendet werden kann, wobei mittels des Steuerbefehls des Sicherheitsauswertegeräts (1) mindestens ein Schaltglied (24,25) des sicheren Schaltgeräts (2) kontaktschonend über eine Verarbeitungseinheit (26) des sicheren Schaltgerätes (2) angesteuert werden kann, so dass eine über das Schaltglied (24,25) des sicheren Schaltgerätes (2) gesteuerte Versorgungsspannung eines Verbrauchers (4) abgeschaltet werden kann.

2. Sicherer Motorstarter mit einem Sicherheitsauswertegerät (1) und einem sicheren Schaltgerät (2), wobei das sichere Schaltgerät (2) zwei Schaltglieder (24,25) und eine vierte Schnittstelle (21) umfasst und eine Versorgungsspannung eines Verbrauchers (4) sicher steuern kann und das Sicherheitsauswertegerät (1) eine erste Schnittstelle (11) umfasst und über die erste Schnittstelle (11) einen Steuerbefehl an die vierte Schnittstelle (21) des sicheren Schaltgerätes (2) senden kann, wobei das Sicherheitsauswertegerät (1) mit mindestens einem Sensor (5) verbindbar ist, so dass durch ein an dem Sicherheitsauswertegerät (1) anliegendem Sensorsignal des Sensors (5) eine Ausgabe des Steuerbefehls ausgelöst werden kann,
**dadurch gekennzeichnet, dass**
der Motorstarter ferner ein Verbindungsmodul (3) umfasst, welches eine zweite und dritte Schnittstelle (31,32) umfasst, wobei die zweite Schnittstelle (31) elektrisch leitend mit der dritten Schnittstelle (32) verbunden ist, wobei das Verbindungsmodul (3) mit dem Sicherheitsauswertegerät (1) und dem sicheren Schaltgerät (2) mechanisch koppelbar ist, wobei durch das mechanische Koppeln des Sicherheitsauswertegeräts (1) mit dem Verbindungsmodul (3) eine elektrisch leitende Verbindung zwischen der ersten und zweiten Schnittstelle (11,31) herstellbar ist und durch das mechanische Koppeln des sicheren Schaltgeräts (2) mit dem Verbindungsmodul (3) eine elektrisch leitende Verbindung zwischen der dritten und vierten Schnittstelle (32,21) herstellbar ist, so dass im gekoppelten Zustand des Sicherheitsauswertegeräts (1) und des sicheren Schaltgeräts (2) mit dem Verbindungsmodul (3) eine elektrisch leitende Verbindung zwischen der ersten und vierten Schnittstelle (11,21) über das Verbindungsmodul (3) vorliegt und somit der Steuerbefehl von dem Sicherheitsauswertegerät (1) über das Verbindungsmodul (3) an das sichere Schaltgerät (2) gesendet werden kann, wobei mittels des Steuerbefehls des Sicherheitsauswertegeräts (1) mindestens ein Schaltglied (24,25) des sicheren Schaltgeräts (2) unmittelbar und/oder über eine Verarbeitungseinheit (26) des sicheren Schaltgerätes (2) angesteuert werden kann, so dass eine über das Schaltglied (24,25) des sicheren Schaltgerätes (2) gesteuerte Versorgungsspannung eines Verbrauchers (4) abgeschaltet werden kann,
wobei mittels des Steuerbefehls des Sicherheitsauswertegeräts (1) die Spannungsversorgung des sicheren Schaltgerätes (2) abgeschaltet werden kann, so dass eine über das sichere Schaltgerät (2) gesteuerte Versorgungsspannung eines Verbrauchers (4) abgeschaltet werden kann.

3. Sicherer Motorstarter nach Anspruch 1 oder 2, wobei die elektrisch leitende Verbindung (33) zwischen der zweiten und dritten Schnittstelle (31,32) des Verbindungsmoduls (3) innerhalb des Gehäuses (30) des Verbindungsmoduls (3) geführt ist.

4. Sicherer Motorstarter nach einem der Ansprüche 1 oder 3, wobei mittels des Steuerbefehls des Sicherheitsauswertegeräts (1) die Spannungsversorgung des sicheren Schaltgerätes (2) abgeschaltet werden kann, so dass eine über das sichere Schaltgerät (2) gesteuerte Versorgungsspannung eines Verbrauchers (4) abgeschaltet werden kann.

5. Sicherer Motorstarter nach einem der vorhergehenden Ansprüche, wobei im gekoppelten Zustand des Sicherheitsauswertegeräts (1) und des Schaltgerätes (2) mit dem Verbindungsmodul (3) das Sicherheitsauswertegerät (1) die Schaltstellung mindestens eines Schaltgliedes (24,25) des Schaltgerätes (2) über die elektrisch leitende Verbindung zwischen der ersten und vierten Schnittstelle (11,21) ermitteln kann.

6. Sicherer Motorstarter nach einem der vorhergehenden Ansprüche, wobei die mechanische Kopplung zwischen dem Sicherheitsauswertegerät (1) und dem sicheren Schaltgeräte (2) mit dem Verbindungsmodul (3) eine lösbare Verbindung ist.

7. Sicherer Motorstarter nach einem der vorhergehenden Ansprüche, wobei die zweite und dritte Schnittstelle (31,32) des Verbindungsmoduls (3) an einer gleichen Seitenfläche des Verbindungsmoduls (3) angeordnet ist.

8. Sicherer Motorstarter nach Anspruch 6, wobei die der zweiten und dritten Schnittstelle (31,32) gegenüberliegende Seitenfläche des Verbindungsmoduls (3) eine Vorrichtung für eine Befestigung auf einer Hutschiene aufweist.

9. Sicherer Motorstarter nach einem der vorhergehenden Ansprüche, wobei die Baubreite des Verbindungsmoduls (3) im Wesentlichen gleich der des Sicherheitsauswertegerätes (1) und des sicheren Schaltgerätes (2) zusammen ist.

10. Sicherer Motorstarter nach einem der vorhergehenden Ansprüche, wobei bei dem mechanischen Koppeln des Sicherheitsauswertegerätes (1) mit dem Verbindungsmodul (3) und dem sicheren Schaltgerät (2) mit dem Verbindungsmodul (3) eine mechanisch feste Verbindung zwischen den beteiligten Geräten (1,2) mit dem Verbindungsmodulen (3) hergestellt wird, so dass ein unbeabsichtigtes Trennen der Geräte (1,2) von dem Verbindungsmodul (3) verhindert wird.

## Claims

1. Secure motor starter having a security evaluation unit (1) and a secure switch unit (2), wherein the secure switch unit (2) comprises two switching elements (24, 25) and a fourth interface (21) and can securely control a supply voltage of a consumer (4) and the security evaluation unit (1) comprises a first interface (11) and can transmit a control command to the fourth interface (21) of the secure switch unit (2) via the first interface (11), wherein the security evaluation unit (1) can be connected to at least one sensor (5) so that an output of the control command can be triggered by a sensor signal of the sensor (5) present at the security evaluation unit (1), **characterised in that**
the motor starter further comprises a connection module (3), which comprises a second and third interface (31, 32), wherein the second interface (31) is electrically conductively connected to the third interface (32), wherein the connection module (3) can be mechanically coupled to the security evaluation unit (1) and the secure switch unit (2), wherein the mechanical coupling of the security evaluation unit (1) to the connection module (3) enables an electrically conductive connection to be established between the first and second interface (11, 31) and the mechanical coupling of the secure switch unit (2) to the connection module (3) enables an electrically conductive connection to be established between the third and fourth interface (32, 21) so that, in the coupled state of the security evaluation unit (1) and the secure switch unit (2) to the connection module (3), there is an electrically conductive connection between the first and fourth interfaces (11, 21) via the connection module (3) and hence the control command can be transmitted from the security evaluation unit (1) via the connection module (3) to the secure switch unit (2), wherein by means of the control command of the security evaluation unit (1), at least one switching element (24, 25) of the secure switch unit (2) can be controlled in a contact-protecting manner via a processing unit (26) of the secure switch unit (2) so that a supply voltage of a consumer (4) controlled via the switching element (24, 25) of the secure switch unit (2) can be switched off.

2. Secure motor starter with a security evaluation unit (1) and a secure switch unit (2), wherein the secure switch unit (2) comprises two switching elements (24, 25) and a fourth interface (21) and can securely control a supply voltage of a consumer (4) and the security evaluation unit (1) comprises a first interface (11) and can transmit a control command to the fourth interface (21) of the secure switch unit (2) via the first interface (11), wherein the security evaluation unit (1) can be connected to at least one sensor (5) so that an output of the control command can be triggered by a sensor signal of the sensor (5) present at the security evaluation unit (1), **characterised in that**
the motor starter also comprises a connection module (3), which comprises a second and third interface (31, 32), wherein the second interface (31) is connected electrically conductively with the third interface (32), wherein the connection module (3) can be mechanically coupled to the security evaluation unit (1) and the secure switch unit (2), wherein the mechanical coupling of the security evaluation unit (1) to the connection module (3) enables an electrically conductive connection to be established between the first and second interface (32, 21) and the mechanical coupling of the secure switch unit (2) to the connection module (3) enables an electrically conductive connection to be established between the third and fourth interface (32, 21) so that, in the coupled state of the security evaluation unit (1) and the secure switch unit (2) to the connection module (3), there is an electrically conductive connection between the first and fourth interfaces (11, 21) via the connection module (3) and hence the control command can be transmitted from the security evaluation unit (1) via the connection module (3) to the secure switch unit (2), wherein by means of the control command of the security evaluation unit (1), at least one switching element (24, 25) of the secure switch unit (2) can be controlled directly via a processing unit (26) of the secure switch unit (2) so that a supply voltage of a consumer (4) controlled via the switching element (24, 25) of the secure switch unit (2) can be switched off,
wherein the control command of the security evaluation unit (1) can be used to switch off the voltage supply of the secure switch unit (2) so that a supply voltage of a consumer (4) controlled via the secure switch unit (2) can be switched off.

3. Secure motor starter according to claim 1 or 2, wherein the electrically conductive connection (33) between the second and third interfaces (31, 32) of the connection module (3) is guided within the housing (30) of the connection module (3).

4. Secure motor starter according to one of claims 1 or 3, wherein the voltage supply of the secure switch unit (2) can be switched off by means of the control command of the security evaluation unit (1) so that a supply voltage of a consumer (4) controlled via the secure switch unit (2) can be switched off.

5. Secure motor starter according to one of the preceding claims, wherein, in the coupled state of the security evaluation unit (1) and the switch unit (2) to the connection module (3), the security evaluation unit (1) can determine the switch position of at least one switching element (24, 25) of the switch unit (2) via the electrically conductive connection between the first and fourth interfaces (11, 21).

6. Secure motor starter according to one of the preceding claims, wherein the mechanical coupling between the security evaluation unit (1) and the secure switch unit (2) to the connection module (3) is a detachable connection.

7. Secure motor starter according to one of the preceding claims, wherein the second and third interfaces (31, 32) of the connection module (3) are arranged on a same side surface of the connection module (3).

8. Secure motor starter according to claim 6, wherein the side surface of the connection module (3) facing the second and third interfaces (31, 32) comprises a device for attachment to a mounting rail.

9. Secure motor starter according to one of the preceding claims, wherein the combined width of the connection module (3) substantially equates to that of the security evaluation unit (1) and the secure switch unit (2).

10. Secure motor starter according to one of the preceding claims, wherein in the case of the mechanical coupling of the security evaluation unit (1) to the connection module (3) and the secure switch unit (2) to the connection module (3), a mechanically stable connection is established between the participating units (1, 2) and the connection module (3) so that unintentional separation of the units (1, 2) from the connection module (3) is prevented.

## Revendications

1. Démarreur de moteur, sécurisé comprenant un appareil (1) d'évaluation de la sécurisation et un appareil (2) de commutation sécurisé, l'appareil (2) de commutation sécurisé comprenant deux éléments (24, 25) de commutation et une quatrième interface (21) et pouvant commander d'une manière sécurisée une tension d'alimentation d'un utilisateur (4) et l'appareil (1) d'évaluation de la sécurisation comprenant une première interface (11) et pouvant par la première interface (11) envoyer une instruction de commande à la quatrième interface (21) de l'appareil (2) de commutation sécurisé, l'appareil (1) d'évaluation de la sécurisation pouvant être relié à au moins un capteur (5) de manière à pouvoir déclencher une émission de l'instruction de commande par un signal du capteur (5) s'appliquant à l'appareil (1) d'évaluation de la sécurisation,
**caractérisé en ce que**
le démarreur de moteur comprend en outre un module (3) de liaison, qui comprend une deuxième et une troisième interfaces (31, 32), la deuxième interface (31) étant reliée d'une manière conductrice de l'électricité à la troisième interface (32), le module (3) de liaison pouvant être couplé mécaniquement à l'appareil (1) d'évaluation de la sécurisation et à l'appareil (2) de commutation sécurisé, dans lequel, par le couplage mécanique de l'appareil (1) d'évaluation de la sécurisation au module (3) de liaison, une liaison conductrice de l'électricité peut être ménagée entre la première et la deuxième interfaces (11, 31) et, par le couplage mécanique de l'appareil (2) de commutation sécurisé avec le module (3) de liaison, une liaison conductrice de l'électricité peut être ménagée entre la troisième et la quatrième interfaces (32, 31) de sorte qu'à l'état couplé de l'appareil (1) d'évaluation de la sécurisation et de l'appareil (2) de commutation sécurisé avec le module (3), une liaison conductrice de l'électricité existe entre la première et la quatrième interfaces (11, 21) par l'intermédiaire du module (3) de liaison et ainsi l'instruction de commande peut être envoyée de l'appareil (1) d'évaluation de la sécurisation à l'appareil (2) de commutation sécurisé par l'intermédiaire du module (3) de liaison, dans lequel au moyen de l'instruction de commande de l'appareil (1) d'évaluation de la sécurisation au moins un élément (24, 25) de commutation de l'appareil (2) de commutation sécurisé peut être commandé en ménageant le contact par l'intermédiaire d'une unité (26) de liaison de l'appareil (2) de commutation sécurisé, de manière à pouvoir interrompre une tension d'alimentation d'un utilisateur (4) commandée par l'intermédiaire de l'élément (24, 25) de commutation de l'appareil (2) de commutation sécurisé.

2. Démarreur de moteur, sécurisé comprenant un appareil (1) d'évaluation de la sécurisation et un appareil (2) de commutation sécurisé, l'appareil (2) de commutation sécurisé comprenant deux éléments (24, 25) de commutation et une quatrième interface (21) et pouvant commander d'une manière sécurisée une tension d'alimentation d'un utilisateur (4) et l'appareil (1) d'évaluation de la sécurisation comprenant une première interface (11) et pouvant par la première interface (11) envoyer une instruction de commande à la quatrième interface (21) de l'appareil (2) de commutation sécurisé, l'appareil (1) d'évaluation de la sécurisation pouvant être relié à au moins un capteur (5) de manière à pouvoir déclencher une émission de l'instruction de commande par un signal du capteur (5) s'appliquant à l'appareil (1) d'évaluation de la sécurisation,
**caractérisé en ce que**
le démarreur de moteur comprend en outre un module (3) de liaison, qui comprend une deuxième et une troisième interfaces (31, 32), la deuxième interface (31) étant reliée d'une manière conductrice de l'électricité à la troisième interface (32), le module (3) de liaison pouvant être couplé mécaniquement à l'appareil (1) d'évaluation de la sécurisation et à l'appareil (2) de commutation sécurisé, dans lequel, par le couplage mécanique de l'appareil (1) d'évaluation de la sécurisation au module (3) de liaison, une liaison conductrice de l'électricité peut être ménagée entre la première et la deuxième interfaces (11, 31) et, par le couplage mécanique de l'appareil (2) de commutation sécurisé avec le module (3) de liaison, une liaison conductrice de l'électricité peut être ménagée entre la troisième et la quatrième interfaces (32, 31) de sorte qu'à l'état couplé de l'appareil (1) d'évaluation de la sécurisation et de l'appareil (2) de commutation sécurisé avec le module (3), une liaison conductrice de l'électricité existe entre la première et la quatrième interfaces (11, 21) par l'intermédiaire du module (3) de liaison et ainsi l'instruction de commande peut être envoyée de l'appareil (1) d'évaluation de la sécurisation à l'appareil (2) de commutation sécurisé par l'intermédiaire du module (3) de liaison, dans lequel au moyen de l'instruction de commande de l'appareil (1) d'évaluation de la sécurisation au moins un élément (24, 25) de commutation de l'appareil (2) de commutation sécurisé peut être commandé directement et/ou par l'intermédiaire d'une unité (26) de traitement de l'appareil (2) de commutation sécurisé, de manière à pouvoir interrompre une tension d'alimentation d'un utilisateur (4) commandée par l'intermédiaire de l'élément (24, 25) de commutation de l'appareil (2) de commutation sécurisé,
dans lequel, au moyen de l'instruction de commande de l'appareil (1) d'évaluation de la sécurisation, l'alimentation en tension de l'appareil (2) de commutation sécurisé peut être interrompue, de sorte qu'une tension d'alimentation, commandée par l'appareil (2) de commutation sécurisé, d'un utilisateur (4) peut être interrompue.

3. Démarreur de moteur sécurisé suivant la revendication 1 ou 2, dans lequel la liaison (33) conductrice de l'électricité entre la deuxième et la troisième interfaces (31, 32) du module (3) de liaison passe à l'intérieur du boîtier (30) du module (3) de liaison.

4. Démarreur de moteur sécurisé suivant l'une des revendications 1 ou 3, dans lequel au moyen de l'instruction de commande de l'appareil (1) d'évaluation de la sécurisation la tension d'alimentation de l'appareil (2) de commutation sécurisé peut être interrompue de manière à pouvoir interrompre une tension d'alimentation d'un utilisateur (4) commandée par l'appareil (2) de commutation sécurisé.

5. Démarreur de moteur sécurisé suivant l'une des revendications précédentes, dans lequel à l'état couplé de l'appareil (1) d'évaluation de la sécurisation et de l'appareil (2) de commutation avec le module (3) de liaison, l'appareil (1) d'évaluation de la sécurisation peut déterminer la position de commutation d'au moins un élément (24, 25) de commutation de l'appareil (2) de commutation par la liaison conductrice de l'électricité entre la première et la quatrième interfaces (11, 21).

6. Démarreur de moteur sécurisé suivant l'une des revendications précédentes, dans lequel le couplage mécanique entre l'appareil (1) d'évaluation de la sécurisation et l'appareil (2) de commutation sécurisé avec le module (3) de liaison est une liaison qui peut être défaite.

7. Démarreur de moteur sécurisé suivant l'une des revendications précédentes, dans lequel la deuxième et la troisième interfaces (31, 32) du module (3) de liaison sont disposées sur une même surface latérale du module (3) de liaison.

8. Démarreur de moteur sécurisé suivant la revendication 6, dans lequel les surfaces latérales opposées à la deuxième et à la troisième interfaces (31, 32) du module (3) de liaison a un dispositif pour la fixation sur un profilé chapeau.

9. Démarreur de moteur sécurisé suivant l'une des revendications précédentes, dans lequel la largeur de construction du module (3) de liaison est sensiblement égale à celle de l'appareil (1) d'évaluation de la sécurisation et de l'appareil (2) de commutation sécurisé.

10. Démarreur de moteur sécurisé suivant l'une des revendications précédentes, dans lequel, lors du couplage mécanique de l'appareil (1) d'évaluation de la sécurisation au module (3) de liaison et de l'appareil (2) de commutation sécurisé au module (3) de liaison une liaison fixe mécaniquement entre les appareils (1, 2) participants et le module (3)de liaison est ménagée de manière à empêcher une séparation intempestive des appareils (1, 2) du module (3) de liaison.
